# EUROPÄISCHE PATENTANMELDUNG

(11) **EP 3 936 384 A1**
(43) Veröffentlichungstag der Anmeldung: **12.01.2022**
(21) Anmeldenummer: 21020356.8
(22) Anmeldetag: 07.07.2021
(51) Int. Cl.: B60P 3/40

(54) **SCHWERLAST-TRANSPORTFAHRZEUG MIT EINER ANTRIEBSEINRICHTUNG**

(30) Priorität: 07.07.2020 DE 102020004086; 07.07.2020 DE 202020002904 U
(71) Anmelder: Scheuerle Fahrzeugfabrik GmbH, 74629 Pfedelbach (DE)
(72) Erfinder: Ziegler, Jochen, 74629 Pfedelbach (DE)
(74) Vertreter: Leitner, Waldemar

(57) **Zusammenfassung**

Die Erfindung betrifft ein Schwerlast-Transportfahrzeug, welches ein Fahrgestell (2) mit einer Anzahl von hintereinander angeordneten Radanordnungen (3; 3a-3d) sowie eine fahrzeugexterne oder fahrzeuginterne Antriebseinrichtung, die eine permanente Antriebsleistung zur Verfügung stellt, mit der das Schwerlast-Transportfahrzeug (1) antreibbar ist.

Erfindungsgemäß ist vorgesehen, dass das Schwerlast-Transportfahrzeug (1) eine temporäre Antriebseinrichtung (10) aufweist, welche zur Steigerung der fahrzeugextern oder fahrzeugintern zur Verfügung gestellten permanenten Antriebsleistung wahlweise in Wirkeingriff mit mindestens einer Radanordnung (3c) des Schwerlast-Transportfahrzeugs (1) bringbar ist.

## Beschreibung

Die Erfindung betrifft ein Schwerlast-Transportfahrzeug, welches ein Fahrgestell mit einer Anzahl von hintereinander angeordneten Radanordnungen sowie eine fahrzeuginterne oder fahrzeugexterne Antriebseinrichtung, die eine permanente erste Antriebsleistung bereitstellt, mit der das Schwerlast-Transportfahrzeug antreibbar ist, aufweist.

Aus der DE 10 2010 023 307 A1 der Anmelderin ist eine Antriebseinheit für ein modulares, selbst-angetriebenes Schwerlast-Transportfahrzeug bekannt, welche ein in einem Gehäuse der Antriebseinheit aufgenommenes Antriebsaggregat aufweist, das über mindestens eine Druckleitung mit dem Schwerlast-Transportfahrzeug verbindbar ist. Hierbei ist vorgesehen, dass die Antriebseinheit mindestens zwei nebeneinander angeordnete Antriebsaggregate aufweist, die jeweils einen Motor und eine von diesem Motor angetriebene Pumpe besitzen. Mindestens ein Druckausgang der Antriebseinheit ist über eine Druckleitung mit den druckseitigen Ausgängen der Pumpen mindestens zweier Antriebsaggregate verbunden. Eine derartige Ausbildung die in der vorgenannten Druckschrift beschriebenen Antriebseinheit wird für ein modulares, selbst-angetriebenes Schwerlast-Transportfahrzeug eingesetzt, welches dadurch ausgebildet wird, dass mehrere Fahrzeugmodule nebeneinander und/oder hintereinander angeordnet werden, so dass durch eine mechanische Verbindung der einzelnen Fahrzeugmodule ein Fahrzeug-Verbund ausgebildet wird. Da die einzelnen Fahrzeugmodule nicht mit einer Antriebseinheit ausgestattet sind, ist es erforderlich, an das derart gebildete modulare Schwerlast-Transportfahrzeug ein oder mehrere Antriebseinheiten anzukoppeln, um die einzelnen Fahrzeugmodule antreiben zu können. Hierzu sind Antriebseinrichtungen vorgesehen, die ein an eines der Fahrzeugmodule ankoppelbares Gehäuse aufweisen, in dem das Antriebsaggregat aufgenommen ist. Dieses weist einen Verbrennungsmotor auf, der eine Pumpenanordnung zur Erzeugung eines hydraulischen oder pneumatischen Drucks antreibt. Über eine Druckleitung wird dann das vom Antriebsaggregat druckbeaufschlagte Druckmedium zu dem Schwerlast-Transportfahrzeug geleitet. Eine derartige Ausgestaltung erlaubt es, den durch die einzelnen Fahrzeugmodule gebildeten Fahrzeug-Verbund autonom, d. h. ohne ein Zugfahrzeug, zu bewegen.

Außer den vorgenannten selbst-angetriebenen Schwerlast-Transportfahrzeugen sind gezogene oder geschobene Schwerlast-Transportfahrzeuge, insbesondere Schwerlast-Anhänger bekannt, die selbst keine Antriebseinheit aufweisen, sondern von einem Zug- oder Schubfahrzeug gezogen oder geschoben werden. Die dieses Schwerlast-Transportfahrzeug bewegende erste Antriebsleistung wird also von der Antriebseinheit des zugeordneten Zug- oder Schubfahrzeugs - also von einer fahrzeugexternen Antriebseinrichtung - bereitgestellt. Ohne die Antriebskraft eines derartigen Antriebsfahrzeugs kann das vorgenannte Schwerlast-Transportfahrzeug nicht bewegt werden, sondern es muss immer ein entsprechendes Zug- oder Schubfahrzeug, insbesondere auch beim Rangieren, angekoppelt werden. Dies ist nicht nur zeitintensiv, sondern bindet auch Ressourcen, da auch für - in der Regel nur kurzfristige - Rangierzwecke ein ansonsten den Transport von einem Beladeort zu einem Abladeort bewirkendes Zugfahrzeug vorgehalten werden muss.

Außerdem kann es für bestimmte Fahrsituationen, z. B. bei einem Festfahren des Schwerlast-Transportfahrzeugs oder bei steilen Anstiegen, insbesondere bei Bergabschnitten eines Transportvorgangs, vorteilhaft sein, dass eine erhöhte Antriebsleistung zur Verfügung steht.

Es ist auch bekannt, bei einem Schwerlast-Transportfahrzeug vorzusehen, dass in bestimmten Betriebsarten eine Umverteilung der von der Antriebseinrichtung des bekannten Schwerlast-Transportfahrzeugs permanent bereitgestellten Antriebsleistung erfolgt. Z. B. beschreibt die DE 10 2016 203 577 A1 ein Schwerlastfahrzeug und eine Radbaugruppe für ein derartiges Schwerlastfahrzeug. Bei diesem ist vorgesehen, dass wenigstens eine Radbaugruppe eine Kupplungsvorrichtung umfasst, welche eine Kraftübertragungsverbindung zwischen der fahrzeuginternen Antriebseinheit und den Rädern wahlweise unterbricht oder herstellt. Außerdem ist eine für den Betrieb des Nutzfahrzeugs im öffentlichen Strassenverkehr bis zu Geschwindigkeiten von mehr als 25 km/h zugelassene Bremsvorrichtung vorgesehen. Eine Antriebswelle der Antriebseinheit des bekannten Schwerlastfahrzeugs steht mit einer ersten Getriebestufe in einem Drehmoment-übertragenden Eingriff. Sie weist zwei Abtriebsenden auf, wobei das eine Abtriebsende in Richtung eines Längsendes eines Radträgers der Radgruppe und das andere Abtriebsende in Richtung eines zweiten Längsendes dieses Radträgers weist. Die beiden Abtriebsenden der ersten Getriebestufe sind jeweils mit einer Kupplung verbunden, die abtriebsseitig jeweils mit einer zweiten Getriebestufe verbunden ist. Jede der beiden zweiten Getriebestufen ist an einer der Kupplung gegenüberliegenden Seite mit einer Betriebsbremse verbunden, die für den Betrieb des erfindungsgemäßen Nutzfahrzeugs im öffentlichen Strassenverkehr bis zu Geschwindigkeiten von mehr als 25 km/h dienen. Die abtriebsseitigen Betriebsbremsen sind jeweils mit einer Radnabe verbunden, die an dem Radträger relativ zu diesem um eine zu der Längsachse des Radträgers im Wesentlichen parallelen Drehachse drehbar gelagert ist. Die beiden Kupplungen sind derart ausgebildet, dass sie dann, wenn sich das Nutzfahrzeug mit einer Geschwindigkeit bewegt, die geringer als eine vorbestimmte Schaltgeschwindigkeit ist, Drehmomente von der ersten Getriebestufe zu der zweiten Getriebestufe weiterleiten können. In diesem Zustand kann das Fahrzeug als selbstfahrendes Fahrzeug betrieben werden, das mittels der Antriebseinheiten angetrieben werden kann. Auf diese Weise kann das Fahrzeug beispielsweise ein Zugfahrzeug, mit dem es verbunden ist, beim Überwinden einer Steigung unterstützen. Überschreitet die Geschwindigkeit des Nutzfahrzeugs hingegen die vorbestimmte Schaltgeschwindigkeit, so öffnen die Kupplungen automatisch, so dass die Drehmomentweiterleitung von der ersten Getriebestufe zur zweiten Getriebestufe unterbrochen ist. In diesem Zustand kann das Nutzfahrzeug als reines Anhängerfahrzeug betrieben werden, das mittels des Zugfahrzeugs bewegt wird. Bei dem aus der vorgenannten Druckschrift bekannten Schwerlastfahrzeug ist es also zwingend erforderlich, dass es die vorstehend beschriebene Ausgestaltung von Anfang an aufweist, d. h. dass das Nutzfahrzeug in der vorstehend beschriebenen Konfiguration strassenverkehrsrechtlich zugelassen ist. Es ist bei diesem bekannten Schwerlastfahrzeug somit nicht möglich, nachträglich eine weitere Antriebsleistung zur Verfügung zu stellen.

Die DE 10 2014 007 979 A1 beschreibt einen Fahrzeug-Verbund mit mehreren angetriebenen Fahrzeugmodulen, wobei jedes Fahrzeugmodul mindestens eine angetriebene Achse mit mindestens einem Antriebsmotor aufweist. Der Fahrzeug-Verbund besitzt mindestens eine Antriebseinrichtung für die Antriebsmotoren der Achsen der Fahrzeugmodule, durch welche die zum Antrieb dieser Antriebsmotoren benötigte Antriebsenergie erzeugbar ist. Es ist eine Steuereinrichtung vorgesehen, durch welche zumindest die Antriebsmotoren der angetriebenen Achsen der Fahrzeugmodule ansteuerbar, insbesondere an- und abschaltbar sind.

Aus der DE 20 2016 105 321 U1 ist ein Rangierantriebssystem sowie ein dieses verwendendes Fahrzeug bekannt. Bei Fahrzeugen ohne einen eigenen Antrieb, wie z. B. einem Wohnwagen, einem Boots- oder Pferdeanhänger, wird es oft als problematisch angesehen, dass diese, sofern sie nicht mit dem Zugfahrzeug, z. B. einem PKW, verbunden sind, von Hand nur mühsam fortbewegt werden können. Bei einem Wohnwagenanhänger beispielsweise, der an einer geeigneten Stelle auf einem Campingplatz von dem PKW, mit welchem er transportiert wurde, abgekoppelt worden ist, ist das Rangieren von Hand in die endgültige Parkposition mit großen Anstrengungen für den Fahrer verbunden. Um bei derartigen Fahrzeugen in abgekoppeltem Zustand einen Rangiervorgang zu erleichtern, wurden Rangierantriebssysteme entwickelt, welche an einem Fahrzeug ohne Eigenantrieb montiert werden können. Ein solches Rangiersystem umfasst in der Regel wenigstens zwei Antriebseinheiten, über welche die Räder des zu rangierenden Fahrzeugs in Rotation versetzt werden können. Die Antriebseinheiten werden an der Fahrzeugaußenseite, in der Regel in einem Bereich unmittelbar vor oder hinter den Rädern, welche die Antriebseinheiten antreiben sollen, montiert. Die Antriebseinheiten umfassen jeweils ein rotierbares Antriebselement, beispielsweise ein Reibrad, welches in halbschlüssigem Kontakt mit einem Rad des Fahrzeugs gebracht wird, so dass eine Rotation des Antriebselements eine Rotation des Rades des Fahrzeugs bewirkt. Jedem Antriebselement ist ein Motor zugeordnet, von welchem eine Rotation im Uhrzeigersinn oder entgegen dem Uhrzeigersinn verursacht wird. Es ist vorgesehen, dass jede Antriebseinheit eine eigene Steuereinrichtung, eine eigene Batterie und ein eigenes Kommunikationsmodul zugeordnet ist, und dass die zugeordnete Steuereinrichtung, die zugeordnete Batterie und das zugeordnete Kommunikationsmodul an der jeweiligen Antriebseinheit angeordnet, insbesondere an dieser befestigt ist. Der Grundgedanke der vorstehend beschriebenen Maßnahmen besteht also darin, ein Rangiersystem mit völlig autarken Antriebseinheiten bereit zu stellen, die jeweils - neben einem eigenen Antriebsmotor für das Antriebselement und gegebenenfalls einem eigenen Getriebe - eine eigene Steuereinrichtung, ein eigenes Kommunikationsmodul zum kabellosen Empfangen von Befehlen für die Antriebseinheiten, und eine eigene Energieversorgung besitzt. Ein derartiges Rangiersystem ist zum Rangieren von leichten Fahrzeugen wie Wohnwagen, Boots- oder Pferdeanhängern verwendbar, nicht jedoch für einen Einsatz für ein Schwerlast-Transportfahrzeug geeignet.

Es ist daher Aufgabe der vorliegenden Erfindung, ein Schwerlast-Transportfahrzeug zu schaffen, bei dem in einer einfachen Art und Weise temporär eine Steigerung der Antriebsleistung des Schwerlast-Transportfahrzeugs, insbesondere für einen Rangierbetrieb, ermöglicht ist.

Diese Aufgabe wird erfindungsgemäß dadurch gelöst, dass das Schwerlast-Transportfahrzeug eine temporäre Antriebseinrichtung aufweist, welche zur Steigerung der fahrzeugextern oder fahrzeugintern zur Verfügung gestellten permanenten Antriebsleistung wahlweise in Wirkeingriff mit mindestens einer Radanordnung des Schwerlast-Transportfahrzeugs bringbar ist.

Eine vorteilhafte Weiterbildung der Erfindung sieht vor, dass die temporäre Antriebseinrichtung demontierbar am Schwerlast-Transportfahrzeug angeordnet ist.

Eine weitere vorteilhafte Weiterbildung der Erfindung sieht vor, dass die temporäre Antriebseinrichtung ein Reibrad aufweist, welches in Wirkeingriff mit der Radanordnung bringbar ist.

Eine weitere vorteilhafte Weiterbildung der Erfindung sieht vor, dass an mindestens einer Radanordnung ein Zahnrad vorgesehen ist, welches von der temporären Antriebseinrichtung antreibbar ist.

Durch die erfindungsgemäßen Maßnahmen wird in vorteilhafter Art und Weise ein Schwerlast-Transportfahrzeug geschaffen, welches sich dadurch auszeichnet, dass mindestens eine Radanordnung desselben temporär angetrieben werden kann, und zwar in einer Art und Weise, welche in eine behördliche Zulassung des Schwerlast-Transportfahrzeugs nicht eingreift oder diese gefährdet. Indem nun erfindungsgemäß vorgesehen ist, dass das Schwerlast-Transportfahrzeug die erfindungsgemäße temporäre Antriebseinrichtung aufweist, wird in vorteilhafter Art und Weise erreicht, dass für einen kurzzeitigen Betrieb, z. B. für ein Rangieren, kein Zug- oder Schubfahrzeug erforderlich ist, oder dass die temporäre Antriebseinrichtung zusätzlich zu der permanenten fahrzeugexternen oder fahrzeuginternen Antriebseinrichtung, welche die Grund-Antriebsleistung des Schwerlast-Transportfahrzeugs bereitstellt, als eine Art Unterstützungsantrieb zuschaltbar ist. Da die erfindungsgemäße Antriebseinrichtung vorzugsweise demontierbar am Schwerlast-Transportfahrzeug angeordnet ist und direkt an der Radanordnung angreift, ist eine erneute Zulassung für den Straßenverkehr eines derart ausgebildeten Schwerlast-Transportfahrzeugs in vorteilhafter Art und Weise nicht erforderlich, da das erfindungsgemäße Schwerlast-Transportfahrzeug sich weiterhin in der seiner Zulassung zugrundegelegten und/oder von dieser vorausgesetzten baulichen Konfiguration befindet.

Durch die erfindungsgemäßen Maßnahmen wird eine Antriebseinrichtung geschaffen, welche einfach und ohne massive Eingriffe in die Struktur des Fahrgestells des erfindungsgemäßen Schwerlast-Transportfahrzeugs vorgesehen werden kann, ohne dass eine zulassungsrelevante bauliche Veränderung des Fahrgestells und somit des Fahrzeugs durchgeführt werden muss.

Ein Vorteil ist des Weiteren, dass durch die beschriebenen Maßnahmen auch Schwerlast-Transportfahrzeuge mit einer entsprechenden Antriebseinrichtung nachgerüstet werden können.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: eine perspektivische Ansicht eines Schwerlast-Transportfahrzeugs mit einem ersten Ausführungsbeispiel einer Antriebseinrichtung,
- Figur 2: eine Seitenansicht der Figur 1,
- Figur 3: eine vergrößerte Darstellung des Details B der Figur 2,
- Figur 4: eine perspektivische Darstellung des Schwerlast-Transportfahrzeugs mit einem zweiten Ausführungsbeispiel einer Antriebseinrichtung, und
- Figur 5: eine vergrößerte Darstellung des Bereichs C der Figur 4.

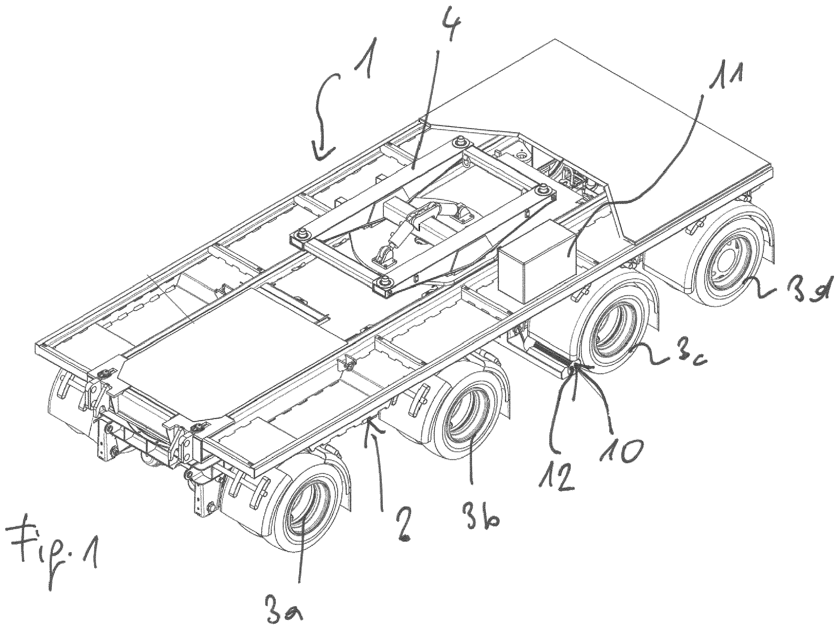

In den Figuren 1 bis 3 ist eine Ausführungsform eines an und für sich bekannten und daher nicht mehr näher beschriebenen Schwerlast-Transportfahrzeugs 1 dargestellt, welches ein Fahrgestell 2 mit einer Anzahl von hintereinander angeordneten Radanordnungen 3a-3d aufweist. Auf dem Schwerlast-Transportfahrzeug 1 ist in ebenfalls bekannter Art und Weise ein Lastbett 4 für die zu transportierende Last angeordnet.

Nicht gezeigt ist in den Figuren eine Kopplungseinrichtung wie eine Deichsel oder eine Zugstange oder eine entsprechende Aufnehmung dafür, mittels derer das Schwerlast-Transportfahrzeug 1 mit einem Zug- oder Schubfahrzeug, also ein Antriebsfahrzeug (nicht gezeigt) verbunden werden kann. Dieses Zug- oder Schubfahrzeug weist eine Antriebseinrichtung (ebenfalls nicht gezeigt) auf, welche zum Antrieb des Zug- oder Schubfahrzeugs dient und eine permanente erste Antriebsleistung zur Verfügung stellt, so dass durch dieses Zug- oder Schubfahrzeug das über die Kopplungseinrichtung mechanisch mit diesem verbundene Schwerlast-Transportfahrzeug 1 bewegbar ist. Das Schwerlast-Transportfahrzeug 1 wird durch die fahrzeugexterne, permanente Antriebseinrichtung des Antriebsfahrzeugs bewegt. Im Sinne einer prägnanteren Beschreibung wird im Folgenden davon ausgegangen, dass das Schwerlast-Transportfahrzeug 1 ein gezogenes Fahrzeug ist. Die gleichen Überlegungen gelten auch für ein von einem entsprechenden Antriebsfahrzeug gezogenes Schwerlast-Transportfahrzeug 1.

Um nun eine zumindest kurzfristige Bewegung des Schwerlast-Transportfahrzeugs 1, z. B. während eines Rangierbetriebs, ohne ein Zugfahrzeug zu ermöglichen, ist nun eine temporäre Antriebseinrichtung 10 vorgesehen, welche zumindest vorübergehend mit mindestens einer Radanordnung, im hier gezeigten Fall exemplarisch mit der Radanordnung 3c, in Eingriff gebracht werden kann, so dass hierdurch diese Radanordnung 3c rotierend angetrieben und derart das Schwerlast-Transportfahrzeug 1 bewegt werden kann.

Wesentlich dabei ist, dass diese temporäre Antriebseinrichtung 10 derart ausgestaltet ist, dass eine bereits erteilte, für einen Betrieb des Schwerlast-Transportfahrzeugs 1 auf öffentlichen Verkehrsflächen erforderliche behördliche Zulassung erhalten bleibt: Schwerlast-Transportfahrzeuge der beschriebenen Art bedürfen nämlich aufgrund der von ihnen in der Regel transportierten hohen Lasten jeweils einer technischen Abnahme und die aufgrund derselben erteilte behördliche Zulassung verbietet grundsätzlich jedwede Modifikation, insbesondere am Fahrwerk und/oder den Radanordnungen.

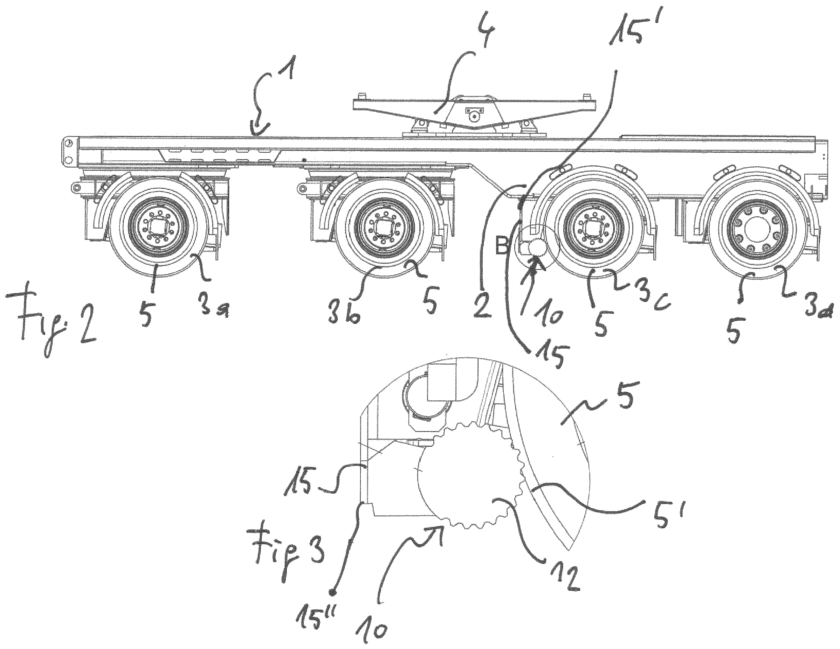

Bei dem in den Figuren 1 bis 3 gezeigten ersten Ausführungsbeispiel der Antriebseinrichtung 10 ist, wie am besten aus Figur 3 ersichtlich ist, vorgesehen, dass die temporär in Eingriff mit einer Radanordnung bringbare Antriebseinrichtung 10 ein von einer nicht näher dargestellten Antriebseinheit 11 (siehe Figur 1, in Figur 2 nicht dargestellt) angetriebenes Reibrad 12 aufweist, welches in Wirkeingriff mit einer Lauffläche 5' eines Reifens 5 der Radanordnung 3c gebracht wird. Durch diese kraftschlüssige, hier reibschlüssige Verbindung zwischen Reibrad 12 und Reifen 5 wird eine Rotationsbewegung des Reibrads 12 in eine Drehbewegung des Reifens 5 und somit der Radanordnung 3c umgesetzt.

Die Ausgestaltung der Antriebseinrichtung 10 ist vorzugsweise derart, dass sie leicht am Fahrgestell 2 montiert und demontiert werden kann, so dass bei montierter Antriebseinrichtung 10 das Reibrad 12 mit der Radanordnung 3c in Wirkeingriff steht und derart eine Rangierbewegung des Schwerlast-Transportfahrzeugs 1 ermöglicht, während bei einer vom Fahrgestell 2 des Schwerlast-Transportfahrzeugs 1 abgenommenen Antriebseinrichtung 10 nicht nur der Wirkeingriff aufgehoben ist, sondern sich das Schwerlast-Transportfahrzeug 1 in seiner der technischen Abnahme zugrundeliegenden Konfiguration befindet. Es ist aber nicht zwingend erforderlich, die Antriebseinrichtung 10 wie vorstehend beschrieben zu montieren und zu demontieren. Falls es die entsprechenden rechtlichen Voraussetzungen erlauben, kann es durchaus ausreichend sein, dass die Antriebseinrichtung 10 derart ausgestaltet ist, dass das Reibrad 12 zur Radanordnung 3c hinund von dieser wieder wegbewegbar, insbesondere wegschwenkbar ist, so dass in der wegbewegten Position kein Wirkeingriff zwischen Reibrad 12 und Radanordnung 3c mehr besteht. Das Anbringen der Antriebseinrichtung 10 am Fahrgestell 2 ist einfach und ohne massive Eingriffe in die Struktur des Fahrgestells 2 durchzuführen, so dass keine zulassungsrelevanten baulichen Veränderungen des Fahrgestells 2 und somit des Schwerlast-Transportfahrzeugs 1 gegeben sind. Von Vorteil ist, dass auf diese Weise auch Fahrgestelle 2 von Schwerlast-Transportfahrzeugen 1 nachgerüstet werden können, dass auch diese nachträglich für einen Einsatz mit der beschriebenen Antriebseinrichtung 10 nachgerüstet werden können.

Beim hier beschriebenen ersten Ausführungsbeispiel weist die Antriebseinrichtung 10 einen Träger 15 auf, der mit seinem ersten Ende 15' am Fahrgestell 2 montierbar ist und an seinem zweiten Ende 15" das Reibrad 12 trägt. Ein derartiger Träger 15 ist leicht am Fahrgestell 2 zu montieren und wieder abzunehmen.

Hierzu bedarf es lediglich einer einfachen mechanischen Verbindung zwischen dem ersten Ende 15' des Trägers 15 und dem Fahrgestell 2. Die zur Anbringung des Trägers 15 erforderlichen Modifikationen am Fahrgestell 2 sind so geringfügig, dass in der Regel hierdurch eine behördliche Zulassung nicht erlischt oder beeinträchtigt wird.

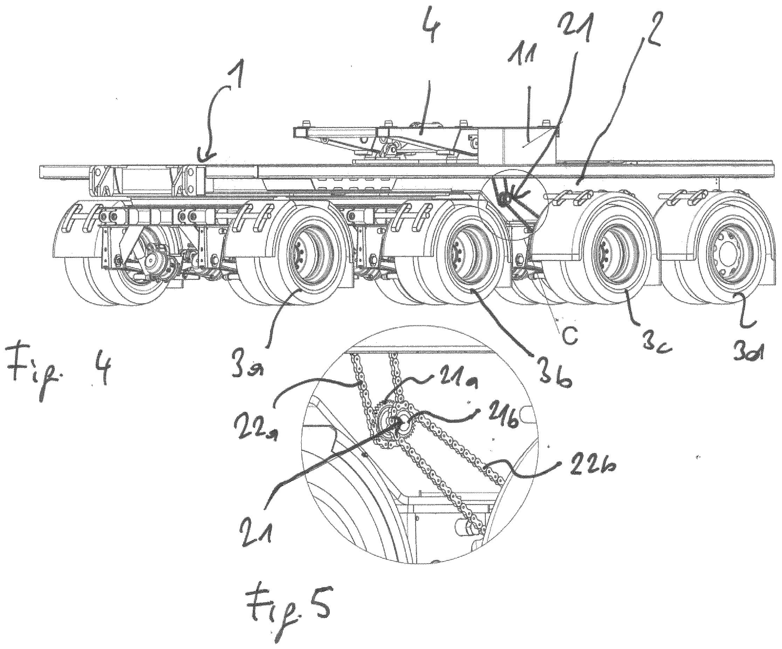

In den Figuren 4 und 5 ist das Schwerlast-Transportfahrzeug 1 der Figuren 1 bis 3 zusammen mit einem zweiten Ausführungsbeispiel einer Antriebseinrichtung 10 dargestellt. Einander entsprechende Bauteile werden mit den gleichen Bezugszeichen versehen und nicht mehr näher im Detail beschrieben. Der wesentliche Unterschied zwischen dem ersten und zweiten Ausführungsbeispiel der Antriebseinrichtung 10 besteht darin, dass die zweite Antriebseinrichtung 10 anstelle des Reibrads 12 der ersten Antriebseinrichtung 10 zur Herstellung einer kraftschlüssigen Verbindung zwischen Antriebseinrichtung 10 und Radanordnung 3c einen Kettenantrieb verwendet. Hierzu ist auf der Radachse der Radanordnung 3c ein Zahnrad (nicht gezeigt) angeordnet. Dieses Zahnrad wird von der Antriebseinheit 11 angetrieben, welche in Figur 4 beispielhaft auf dem Lastbett 4 angeordnet ist. Dem Fachmann ist ersichtlich, dass diese Anordnung der Antriebseinheit 11 auch hier nur einen exemplarischen Charakter besitzt. Es ist möglich, dass das an der Radanordnung 3c vorgesehene Zahnrad sowie die Antriebseinheit 11 unmittelbar mittels einer entsprechenden Antriebskette verbunden ist. Bevorzugt wird jedoch die in den Figuren 4 und 5 gezeigte Ausgestaltung, bei der die Antriebseinheit 11 und das Zahnrad der Radanordnung 3c mittels eines Kettenantriebs 21 miteinander verbunden sind. Hierzu ist am Fahrgestell 2 des Schwerlast-Transportfahrzeugs 1 zwei konzentrisch angeordnete miteinander verbundene Zahnräder 21a und 21b vorgesehen, wobei das erste Zahnrad 21a mittels einer ersten Kette 22a mit der Antriebseinheit 11 und das zweite Zahnrad 21b mittels einer weiteren Kette 22b mit dem an der Radanordnung 3c angeordneten Zahnrad verbunden sind.

Dem Fachmann ist aus den obigen Ausführungsbeispielen klar ersichtlich, dass die dort beschriebenen Beispiele, auf welche Art und Weise eine Radanordnung, hier die Radanordnung 3c, der Radanordnung 3 des Schwerlast-Transportfahrzeugs 1 zumindest und vorzugsweise temporär angetrieben werden, nur exemplarischen Charakter besitzt. Vielmehr ist eine Reihe von weiteren Ausgestaltungen denkbar. Wesentlich ist nur, dass durch die beschriebenen Maßnahmen ein Zusatzantrieb für ein Schwerlast-Transportfahrzeug 1 ausgebildet ist, welches zumindest eine kurzfristige Bewegung des Schwerlast-Transportfahrzeugs 1 durch die beschriebene Antriebseinheit 11, z. B. einen Rangierbetrieb, ermöglicht.

Bei den beiden vorstehend beschriebenen Ausführungsbeispielen wird davon ausgegangen, dass das Schwerlast-Transportfahrzeug 1 ein gezogenes oder ein geschobenes Schwerlast-Transportfahrzeug 1 ist, welches primär von einem Zugoder Schubfahrzeug gezogen oder geschoben wird, wobei das Zug- oder Schubfahrzeug eine Antriebseinrichtung, die eine permanente Antriebsleistung für das Schwerlast-Transportfahrzeug zur Verfügung stellt, aufweist. Dem Fachmann ist aber aus vorstehenden Ausführungen ersichtlich, dass die beschriebenen Maßnahmen - Vorsehen einer eine temporäre Antriebsleistung zur Verfügung stellenden Antriebseinrichtung 10-auch bei einem selbstfahrenden Schwerlast-Transportfahrzeug möglich sind. Bei dieser ist dann die eine permanente Antriebsleistung zur Verfügung stellende Antriebseinrichtung in diesem integriert, also als fahrzeuginterne Antriebseinrichtung ausgebildet. Es sind somit keine Vorrichtungen wie eine Deichsel erforderlich, um dieses Schwerlast-Transportfahrzeug zu bewegen. Es soll also der in den nachstehenden Ansprüchen verwendete Begriff "Schwerlast-Transportfahrzeug" sowohl ein gezogenes oder geschobenes Schwerlast-Transportfahrzeug als auch ein selbstfahrendes, also selbst angetriebenes Schwerlast-Transportfahrzeug umfassen.

## Patentansprüche

1. Schwerlast-Transportfahrzeug, welches ein Fahrgestell (2) mit einer Anzahl von hintereinander angeordneten Radanordnungen (3; 3a-3d) sowie eine fahrzeugexterne oder fahrzeuginterne Antriebseinrichtung, die eine permanente Antriebsleistung zur Verfügung stellt, mit der das Schwerlast-Transportfahrzeug (1) antreibbar ist, **dadurch gekennzeichnet, dass** das Schwerlast-Transportfahrzeug (1) eine temporäre Antriebseinrichtung (10) aufweist, welche zur Steigerung der fahrzeugextern oder fahrzeugintern zur Verfügung gestellten permanenten Antriebsleistung wahlweise in Wirkeingriff mit mindestens einer Radanordnung (3c) des Schwerlast-Transportfahrzeugs (1) bringbar ist.

2. Schwerlast-Transportfahrzeug nach Anspruch 1, **dadurch gekennzeichnet, dass** die temporäre Antriebseinrichtung (10) demontierbar am Schwerlast-Transportfahrzeug (1) angeordnet ist.

3. Schwerlast-Transportfahrzeug nach einem der vorangehenden Ansprüche, **dadurch gekennzeichnet, dass** die temporäre Antriebseinrichtung (10) ein Reibrad (12) aufweist, welches in Wirkeingriff mit der Radanordnung (3c) bringbar ist.

4. Schwerlast-Transportfahrzeug nach Anspruch 3, **dadurch gekennzeichnet, dass** das Reibrad (12) in Wirkeingriff mit einer Lauffläche (5') eines Reifens (5) der Radanordnung (3c) bringbar ist.

5. Schwerlast-Transportfahrzeug nach einem der vorangehenden Ansprüche, **dadurch gekennzeichnet, dass** das Schwerlast-Transportfahrzeug (1) eine Antriebseinheit (11) für die temporäre Antriebseinrichtung (10) aufweist.

6. Schwerlast-Transportfahrzeug nach einem der vorangehenden Ansprüche, **dadurch gekennzeichnet, dass** die Antriebseinheit (11) das Reibrad (12) der temporären Antriebseinrichtung (10) antreibt.

7. Schwerlast-Transportfahrzeug nach einem der Ansprüche 1 bis 5, **dadurch gekennzeichnet, dass** an mindestens einer Radanordnung (3c) ein Zahnrad vorgesehen ist, und dass das Zahnrad von der temporären Antriebseinrichtung (10) antreibbar ist.

8. Schwerlast-Transportfahrzeug nach Anspruch 7, **dadurch gekennzeichnet, dass** das Zahnrad der Radanordnung (3c) und die Antriebseinheit (11) durch einen Kettenantrieb (21) miteinander verbunden sind.

9. Schwerlast-Transportfahrzeug nach Anspruch 8, **dadurch gekennzeichnet, dass** am Fahrgestell (2) des Schwerlast-Transportfahrzeugs (1) eine Zahnradanordnung mit mindestens zwei Zahnrädern (21a, 21b) vorgesehen ist, und dass ein erstes Zahnrad (21a) mittels einer ersten Kette (22a) mit der Antriebseinheit (11) und das zweite Zahnrad (21b) mittels einer weiteren Kette (22b) mit dem Zahnrad der Radanordnung (3c) verbunden ist.

10. Schwerlast-Transportfahrzeug nach einem der vorangehenden Ansprüche, **dadurch gekennzeichnet, dass** die das Schwerlast-Transportfahrzeug (1) bewegende permanente Antriebsleistung durch eine im Schwerlast-Transportfahrzeug (1) angeordnete fahrzeuginterne Antriebseinrichtung erzeugt ist.

11. Schwerlast-Transportfahrzeug nach einem der Ansprüche 1 bis 10, **dadurch gekennzeichnet, dass** die das Schwerlast-Transportfahrzeug (1) antreibende permanente Antriebsleistung von einer Antriebseinrichtung bereitgestellt ist, die fahrzeugextern in einem mit dem Schwerlast-Transportfahrzeug (1) gekoppelten Zug- oder Schubfahrzeug angeordnet ist.
